# EUROPÄISCHE PATENTSCHRIFT

(11) **EP 1 704 010 B1**
(45) Veröffentlichungstag und Bekanntmachung des Hinweises auf die Patenterteilung: **16.05.2007**
(21) Anmeldenummer: 04804378.0
(22) Anmeldetag: 29.12.2004
(51) Int. Cl.: B23B 31/12

(54) **SPANNEINRICHTUNG**
CLAMPING DEVICE
DISPOSITIF DE SERRAGE

(30) Priorität: 07.01.2004 DE 102004001839
(43) Veröffentlichungstag der Anmeldung: 27.09.2006
(73) Patentinhaber: HAINBUCH GMBH SPANNENDE TECHNIK, D-71672 Marbach (DE)
(72) Erfinder: WELLER, Hans-Michael, 71672 Marbach (DE)
(74) Vertreter: Patentanwälte Ruff, Wilhelm, Beier, Dauster & Partner
(86) Internationale Anmeldenummer: PCT/EP2004/014792
(87) Internationale Veröffentlichungsnummer: WO 2005/065871

(56) Entgegenhaltungen:
- DE-A1- 3 425 873
- FR-A- 502 015

## Beschreibung

### Anwendungsgebiet und Stand der Technik

Die Erfindung betrifft eine Spanneinrichtung mit den Merkmalen des Oberbegriffs des Anspruchs 1 und wie z.B. ans FR-A-502 015 bekannt ist.

Spanneinrichtungen zum Einspannen von Werkstücken, beispielsweise in Werkzeugmaschinen, sind bekannt. Sie sorgen dafür, dass ein Werkstück sicher und spielfrei gehalten wird. Für diesen Zweck verfügen Spanneinrichtungen über Spannsegmente, die mit Hilfe eines dafür vorgesehenen Mechanismus zusammengedrückt werden und dabei das Werkstück festklemmen. Bei heute üblichen Spanneinrichtungen werden, beispielsweise mittels eines Spannzylinders, alle Spannsegmente miteinander bewegt. Dies bringt den wesentlichen Nachteil mit sich, dass bei einem beispielsweise vierteiligen Spannkopf in dem Augenblick des Schließens, wenn das erste Paar der Spannsegmente an dem Werkstück anliegt, eine weitere Bewegung des noch nicht anliegenden Spannsegmentpaares nicht mehr möglich ist. Dies wirkt sich insbesondere bei Mehrkantprofilen mit größeren Toleranzen negativ aus.

### Aufgabe und Lösung

Der Erfindung liegt die Aufgabe zugrunde, eine eingangs genannte Spanneinrichtung zu schaffen, mit der die Nachteile des Standes der Technik vermieden werden können und insbesondere ein sicherer Halt des Werkstücks durch alle Spannsegmente gewährleistet werden kann.

Gelöst wird diese Aufgabe durch eine Spanneinrichtung mit den Merkmalen des Anspruchs 1. Vorteilhafte sowie bevorzugte Ausgestaltung der Erfindung sind in den weiteren Ansprüchen angegeben und werden im folgenden näher erläutert. Der Wortlaut der Ansprüche wird durch ausdrückliche Bezugnahme zum Inhalt der Beschreibung gemacht.

Erfindungsgemäß weist die Spanneinrichtung mehrere Aufnahmeteile auf, die in Spannrichtung verschiebbar sind und so ausgebildet sind, dass jedes der Aufnahmeteile jeweils ein Spannkopfsegment oder zwei gegenüberliegende Spannkopfsegmente der schrägen Innenfläche aufweist, so dass jedes Aufnahmeteil jeweils die Gleitflächen für ein Spannkopfsegment bzw. zwei sich gegenüberliegende Spannkopfsegmente aufweist. Darüber hinaus sind Mittel zur Kraftumlenkung vorgesehen, die in Reaktion auf eine Verschiebung eines Aufnahmeteils in oder entgegen der Spannrichtung eine Verschiebung der anderen Aufnahmeteile in eine entgegengesetzte Richtung bewirken.

Eine solche Spanneinrichtung erlaubt das sichere Einspannen von Werkstücken, auch dann, wenn die Werkstücke ein gegenüber einem Idealzustand abweichenden Querschnitt aufweisen. So ist es beispielsweise mit einer erfindungsgemäßen Spanneinrichtung mit vier Spannkopfsegmenten möglich, ein Werkstück mit rechteckigem Querschnitt einzuspannen, so dass die Spannkopfsegmente an allen vier Seiten fest anliegen und das Werkstück insgesamt einen sehr sicheren Halt hat. Der Ablauf des Spannens gestaltet sich dabei folgendermaßen. Der Spannkopf mit den Spannkopfsegmenten wird in die aus Aufnahmeteilen bestehende Spannmittelaufnahme verschoben. Die Spannkopfsegmente werden dabei durch das Gleiten auf den schrägen Innenflächen der Aufnahmeteile der Spannmittelaufnahme aufeinander zu gedrückt. Dies geschieht, bis das erste Spannkopfsegment mit dem Werkstück in Berührung gerät. Beim weiteren Zusammenziehen wird das Werkstück mit dem Spannkopfsegment, mit dem es in Berührung steht, in Richtung eines oder mehrerer gegenüberliegende Spannkopfsegmente gedrückt. Wenn es mit diesem oder diesen Spannkopfsegmenten zur Berührung kommt, ist keine weitere Verschiebung dieser Spannkopfsegmente relativ zu ihren jeweiligen zugeordneten Aufnahmeteile möglich. Bei einer weiteren Verschiebung des Spannkopfs in der Spanneinrichtung werden deshalb die entsprechenden Aufnahmeteile der Spannmittelaufnahme mit verschoben. Durch die Mittel zur Kraftumlenkung führt dies dazu, dass jene Aufnahmeteile, deren Spannkopfsegmente noch nicht mit dem Werkstück in Kontakt stehen, in entgegengesetzte Richtung verschoben werden. Dies geschieht bis die nächsten Spannkopfsegmente in Kontakt mit dem Werkstück gelangen. Auf diesem Wege werden im Zuge des Spannvorgangs nacheinander alle Spannkopfsegmente von ihren entsprechenden Aufnahmeteilen gegen das Werkstück gedrückt, bis kein weiteres Verschieben des Spannkopfs in der Spannmittelkaufnahme möglich ist. Die erfindungsgemäße Spanneinrichtung erlaubt also das sichere und spielfreie Einspannen auch von solchen Werkstücken, deren Querschnitt bei herkömmlichen Spanneinrichtungen bislang nur das Einspannen mit zwei Spannkopfsegmenten erlaubte. Die Mittel zur Kraftumlenkung können beispielsweise mechanischer oder hydraulischer Natur sein.

In einer Weiterbildung der Erfindung ist die Anzahl der Spannkopfsegmente gerade und für jeweils zwei gegenüberliegende Spannkopfsegmente ist ein Aufnahmeteil vorgesehen, welches je eine Gleitfläche für jeweils ein Spannkopfsegment aufweist. Eine solche Ausgestaltung der Erfindung führt dazu, dass die Spannkopfsegmente immer paarweise an dem Werkstück angreifen. Darüber hinaus ist diese Ausgestaltung auch bezüglich der Abstützung der auftretenden Kräfte sehr vorteilhaft. Beim Verschieben des Spannkopfs in der Spannmittelaufnahme kommt es zu starken radialen Kräften auf den Gleitflächen, wobei diese Kräfte bei gegenüberliegenden Gleitflächen jeweils gleich groß sind und in entgegengesetzte Richtung wirken. Durch die einteilige Ausführung der Aufnahmeteile für jeweils zwei Gleitflächen können diese Aufnahmeteile die auftretenden Kräfte aufnehmen.

In einer Weiterbildung der Erfindung weist die Spanneinrichtung zwei Aufnahmeteile und vier Spannkopfsegmente auf. Eine solche Konstellation ist ideal für das Einspannen von Vierkantprofilen. Bei solchen Vierkantprofilen, die von dem Ideal eines quadratischen Querschnitts abweichen, ist ein sicheres Einspannen mit der erfindungsgemäßen Spanneinrichtung möglich. Die Verwendung von nur zwei Aufnahmeteilen ist insbesondere deshalb zweckmäßig, da dies den konstruktiven Aufwand für die Mittel zur Kraftumlenkung deutlich reduziert. Die Mittel müssen so ausgebildet sein, dass ein Verschieben des ersten Aufnahmeteils zu einer entgegengesetzten Verschiebung des anderen Aufnahmeteils führt.

In einer Weiterbildung der Erfindung sind die Spannkopfsegmente regelmäßig auf einem Kreisbogen angeordnet. Dadurch gewährleistet die Spanneinrichtung einen festen Halt des Werkstücks. Das Werkstück wird von allen Seiten gleichmäßig gehalten.

In einer Weiterbildung der Erfindung ist die gesamte Innenfläche der Spannmittelaufnahme und die gesamte Außenfläche des Spannkopfs konisch ausgebildet. Die konische Innenfläche der Spannmittelaufnahme wird dabei durch die Teilflächen der verschiedenen Aufnahmeteile gebildet. Die konische Außenfläche des Spannkopfs wird durch die Teilflächen der Spannkopfsegmente gebildet. In Betrieb kann es zu Abweichungen gegenüber der Konizität der Innen- bzw. Außenflächen geben, da sowohl die Aufnahmeteile als auch die Spannkopfsegmente in Spannrichtung gegeneinander verschiebbar sind. Die konische Gestaltung der Innenfläche der Spannmittelaufnahme und der Außenfläche des Spannkopfs ist vor allem unter wirtschaftlichen Gesichtspunkten bezüglich der Fertigung sinnvoll.

In einer Weiterbildung der Erfindung handelt es sich bei den Mitteln zur Kraftumlenkung um ein Keilgetriebe, welches auf einer zu der Spannrichtung der Spanneinrichtung orthogonalen Ebene bewegliche Keilelemente mit jeweils zwei Keilflächen aufweist. Darüber hinaus weisen die Aufnahmeteile bei dieser Weiterbildung der Erfindung jeweils Keilflächen auf, die mit jeweils einer Keilfläche der Keilelemente korrespondieren, wobei vorzugsweise die Anzahl der Keilelemente gleich der Anzahl der Spannkopfsegmente ist. Ein solches Keilgetriebe stellt einen unkomplizierten und kostengünstig herstellbaren Weg zur Kraftumlenkung dar. Wenn ein Spannkopfsegment am Werkstück angreift und infolgedessen beim weiteren Verschieben des Spannkopfs das dem Spannkopfsegment zugeordnete Aufnahmeteil gemeinsam mit dem Spannkopfsegment in Spannrichtung verschoben wird, führt diese Verschiebung zu einer Verschiebung von einem oder mehreren Keilelementen in einer zur Spannrichtung orthogonalen Ebene. Die Verschiebung dieser Keilelemente führt dazu, dass andere Aufnahmeteile, deren Spannkopfsegmente noch nicht mit dem Werkstück in Kontakt sind, in entgegengesetzte Richtung bezogen auf das die Verschiebung verursachende Aufnahmeteil bewegt werden. Die Keilelemente sind dabei vorzugsweise so angeordnet, dass sie jeweils benachbart angeordnete Aufnahmeteile kinematisch miteinander verbinden. Besonders zweckmäßig ist die Verwendung eines Keilgetriebes für die Kraftumlenkung bei Spanneinrichtungen mit zwei Aufnahmeteilen und vier Spannkopfsegmenten. In einem solchen Fall ist es zweckmäßig, vier Keilelemente vorzusehen, so dass die Kraftübertragung von einem auf das andere Aufnahmeteil sehr gleichmäßig und ohne die Gefahr des Verkantens erfolgt.

In einer Weiterbildung der Erfindung sind die Keilelemente symmetrische ausgebildet und der Winkel der Keilflächen beträgt vorzugsweise jeweils 45°. Eine symmetrische Gestaltung der Keilelemente führt dazu, dass die Kraftumlenkung zwischen zwei Aufnahmeteilen gleichermaßen in beide Richtungen möglich ist. Dadurch ist es unerheblich, welche Spannkopfsegmente zuerst am Werkstück anliegen. Der bevorzugte Teilflächenwinkel von 45° ergibt sich rechnerisch als Ideal bezüglich der Reibungsverluste. Bei einem zugrunde gelegten Reibungskoeffizienten von 0,1 führt ein Keilflächenwinkel von 45° dazu, dass deutlich über 40% der Kraft des Aufnahmeteils, welches in Richtung des Keilelements gedrückt wird, auf das vom Keilelement verschobene Aufnahmeteil übertragen wird.

In einer Weiterbildung der Erfindung sind die Keilelemente asymmetrisch ausgebildet, und die beiden Keilflächen aller Keilelemente weisen jeweils unterschiedliche Winkel auf. Die Verwendung solcher asymmetrischer Keilelemente ist vor allen Dingen dann zweckmäßig, wenn bekannt ist, welche Spannkopfsegmente zuerst in Berührung mit dem Werkstück kommen. Durch eine darauf angepasste Winkel der Keilflächen ist es möglich, eine bessere Kraftumlenkung zwischen den Aufnahmeteilen zu erreichen.

In einer Weiterbildung der Erfindung ist eine Führung, insbesondere in einer Scheibe, für die Keilelemente vorgesehen, vorzugsweise in Form von nutenartigen Vertiefungen. Durch eine solche Führung werden die Freiheitsgrade des Keilelements auf eine einfache Translation beschränkt. Das Keilelement wird sicher geführt und kann bei einer Beaufschlagung durch eine Kraft nicht in eine ungewollte Richtung ausweichen. Besonders vorteilhaft ist eine Führung, die auch das Herausfallen des Keilelements aus der Spanneinrichtung verhindert. Besonders zweckmäßig ist die Führung in Form von Nuten, in die die Keilelemente mittels dafür vorgesehener Führungsabschnitte eingreifen.

In einer Weiterbildung der Erfindung ist die Führung der Keilelemente so ausgebildet, dass die Keilelemente auf einer kreisbogenförmigen Bahn äquidistant zu einer Mittelachse der Spanneinrichtung geführt werden, insbesondere als kreisbogenartige Vertiefung.

In einer Weiterbildung der Erfindung ist die Führung der Keilelemente gerade ausgebildet. Eine solche Führung ist fertigungstechnisch einfach herzustellen und weist eine geringe Störanfälligkeit auf. Darüber hinaus ist eine flächige Berührung zwischen den Aufnahmeteilen und den Keilelementen bei einer gleichbleibenden Ausrichtung der Keilelemente durch eine gerade Führung gegeben. Im Gegensatz zu Keilelementen, deren Ausrichtung sich infolge einer gebogenen Führung abhängig von der Stellung der Aufnahmeteile ändert, und deren Keilflächen deshalb eine kompliziert herzustellende Form aufweisen müssen, können die Keilflächen bei bezüglich der Ausrichtung unveränderten Keilelementen plan ausgebildet sein.

In einer Weiterbildung der Erfindung weisen die Mitteln zur Kraftumlenkung einen Waagebalken auf, der um eine orthogonal zur Spannrichtung ausgerichtete Achse kippbar angeordnet ist oder sich darum drehen kann. Wenn ein erstes Aufnahmeteil in Spannrichtung gedrückt wird, drückt es auf eine Seite des Waagebalkens, so dass dieser um die Achse gekippt wird und damit mittels der entgegengesetzten Seite des Waagebalkens die Kraft auf ein zweites Aufnahmeteil leitet, welches dadurch entgegen der Spannrichtung verschoben wird. Die Kippachse ist vorzugsweise durch einen Lagerzapfen realisiert, dessen Außenradius mit dem Innenradius einer Nut des Waagebalkens übereinstimmt. Zweckmäßig ist auch eine einteilige Ausführung eines Waagebalkens mit einem in Spannrichtung weisenden kreisbogenabschnittsförmigen, abgerundeten oder spitzenförmigen Abschnitt, der im direkten Kontakt mit einer Gegenfläche steht, so dass der Waagebalken mit diesem Abschnitt auf der Gegenfläche abrollen und dadurch kippen kann.

In einer Weiterbildung der Erfindung sind Kugeln als Mittel zur Kraftumlenkung vorgesehen, welche in einem oder mehreren, vorzugsweise U-förmigen, Kanälen angeordnet sind. Wenn ein Aufnahmeteil nach unten gedrückt wird, so drückt es auf eine erste Kugel, die über weitere Kugeln die Kraft weitergibt. Die Kugeln sind in Kanälen angeordnet, die von einem Aufnahmeteil zu einem anderen führen. Die Kraft wird über diese Kugeln weiter geführt, so dass sie am Ende des Kanals auf ein zweites Aufnahmeteil drückt, welches infolge dieser Kraft in bezüglich des ersten Aufnahmeteils entgegengesetzter Richtung verschoben wird.

In einer Weiterbildung der Erfindung sind elastische Verbindungselemente vorgesehen, mittels derer jedes Spannkopfsegment mit seinen beiden Nachbar-Spannkopfsegmenten verbunden ist. Die Spannkopfsegmente bilden so eine fest verbundene Einheit eines Spannkopfs. Die elastischen Verbindungselemente sorgen für Halt und verhindern, dass ein einzelnes Spannkopfelement sich aus der Spanneinrichtung löst. Darüber hinaus können die elastischen Verbindungselemente dafür sorgen, dass die Spannkopfsegmente beim Öffnen der Spanneinrichtung wieder auseinandergedrückt werden. Zu diesem Zweck sind die elastischen Verbindungselemente so ausgebildet, dass sie im geöffneten Zustand der Spanneinrichtung entspannt sind. Beim Spannen der Spanneinrichtung werden auch die elastischen Verbindungselemente gespannt. Vorteilhaft an der Verwendung elastischer Verbindungselemente ist darüber hinaus, dass der Spannkopf so eine Einheit bildet, wodurch Handhabung und insbesondere Montage deutlich erleichtert wird.

In einer Weiterbildung der Erfindung sind in einem umlaufenden Spalt zwischen den in Spannrichtung gegeneinander verschiebbaren Aufnahmeteilen der Spannmittelaufnahme Dichtmittel vorgesehen. Die Dichtmittel verhindern das Eindringen von Verunreinigungen, Ölen oder Kühlflüssigkeit. Besonders gut sind solche Dichtmittel zu realisieren, wenn Aufnahmeteile mit jeweils zwei gegenüberliegenden Gleitflächen verwendet werden. Solche Aufnahmeteile sind zweckmäßigerweise um den darin angeordneten Spannkopf geschlossen.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränkt die unter diesen gemachten Aussagen nicht in ihrer Allgemeingültigkeit.

### Kurzbeschreibung der Zeichnungen

Ausführungsformen der Erfindung mit einer Spannmittelaufnahme aus zwei Aufnahmeteilen und insgesamt vier Spannkopfsegmenten sind in den Zeichnungen schematisch dargestellt und werden im folgenden näher erläutert. In den Zeichnungen zeigen:
- Fig. 1 und 2: eine geschnittene Darstellung der ersten Ausführungsform der zusammengebauten Spanneinrichtung aus zwei verschiedenen Perspektiven,
- Fig. 3: eine geschnittene Darstellung der zweiten Ausführungsform der zusammengebauten Spanneinrichtung und
- Fig. 4: eine Explosionsdarstellung der ersten Ausführungsform der Spannmittelaufnahme ohne Spannkopf.

### Detaillierte Beschreibung der Ausführungsbeispiele

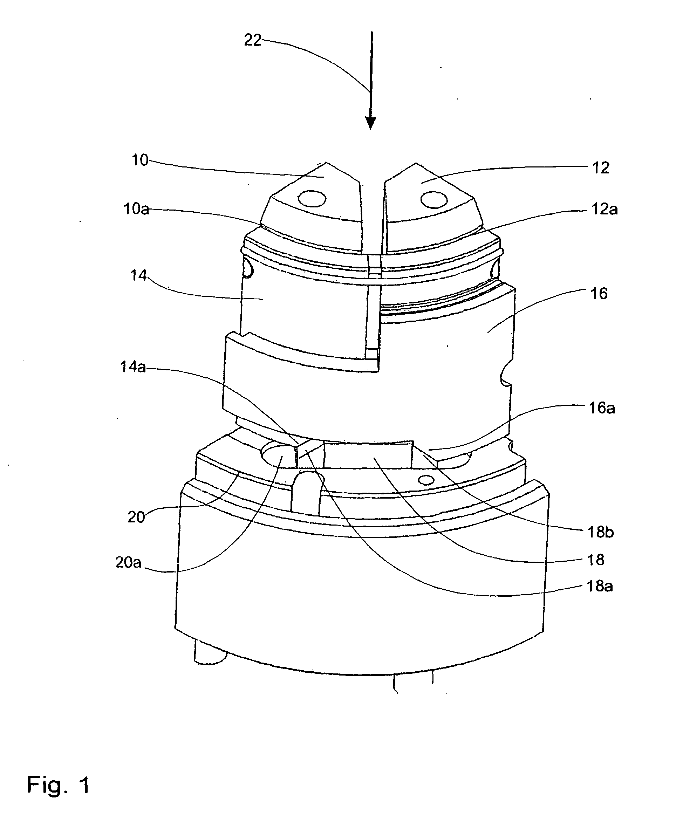

Fig. 1 zeigt eine perspektivische geschnittene Ansicht der erfindungsgemäßen Spanneinrichtung in der ersten Ausführungsform aus einer ersten Perspektive. Dargestellt sind zwei der vier Spannkopfsegmente 10, 12. Diese Spannkopfsegmente 10, 12 sind einander benachbart und so angeordnet, dass sie mit jeweils einem der Aufnahmeteile 14, 16 in Berührung sind. Dabei berührt das erste Spannkopfsegment 10 das innere Aufnahmeteil 14 mit der Kontaktfläche 10a. Das zweite Spannkopfsegment 12 berührt das äußere Aufnahmeteil 16 mit der Kontaktfläche 12a. Die beiden Aufnahmeteile 14, 16 sind so ausgebildet, dass sie um den gesamten Spannkopf herumreichen. Das innere Aufnahmeteil 14 weist neben einer Gleitfläche für das erste Spannkopfsegment 1 auch eine in Fig. 1 nicht dargestellte zweite Gleitfläche für ein den ersten Spannkopfsegment 10 gegenüberliegendes weiteres Spannkopfsegment auf. In ähnlicher Art und Weise weist das äußere Aufnahmeteil 16 neben einer Gleitfläche für das Spannkopfsegment 12 auch eine nicht dargestellte zweite Gleitfläche für ein den zweiten Spannkopfsegment 12 gegenüberliegendes Spannkopfsegment auf. Die beiden Aufnahmeteile 14, 16 sind ineinander geschoben und weisen jeweils vier Keilflächen auf, von denen in der Darstellung jeweils nur eine Keilfläche 14a, 16a zu erkennen ist. Diese Keilflächen 14a, 16a befinden sich in flächigem Kontakt mit zwei Keilflächen 18a, 18b eines Keilelements 18. Das Keilelement 18 liegt in einer Nut 20a einer Führungsscheibe 20, wobei dem Keilelement 18 in dieser Führungsscheibe 20 eine gradlinige translatorische Bewegung möglich ist.

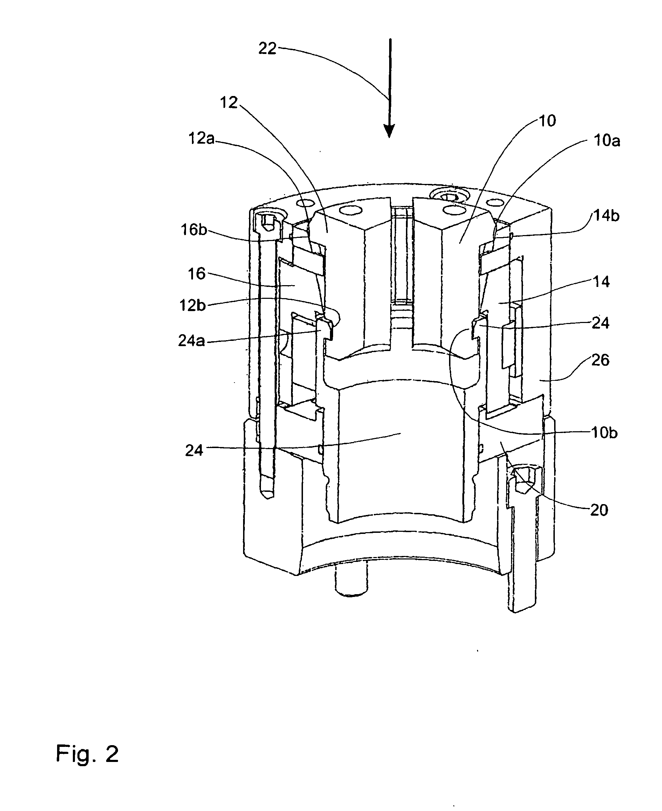

Fig. 2 zeigt den gleichen Schnitt auf die erste Ausführungsform der Spanneinrichtung aus anderer Perspektive. Zu erkennen sind die beiden Spannkopfsegmente 10, 12. Diese weisen eine gemeinsame konusförmige Außenfläche auf, die von den Gleitflächen 10a, 12a gebildet wird. Eine Bewegung der Spannkopfsegmente 10, 12 in eine Spannrichtung 22 wird durch eine Kupplung 24 ermöglicht. Diese Kupplung 24 weist einen umlaufenden nach innen gewandten Steg 24a auf, der in die Nuten 10b, 12b der Spannkopfsegmente 10, 12 greift. Zu erkennen sind darüber hinaus die Aufnahmeteile 14, 16, deren konische Innenfläche, gebildet von den Teilbereichen 16b, 14b, mit jeweils einer der Gleitflächen 10a, 12a der Spannkopfsegmente 10, 12 in Berührung steht.

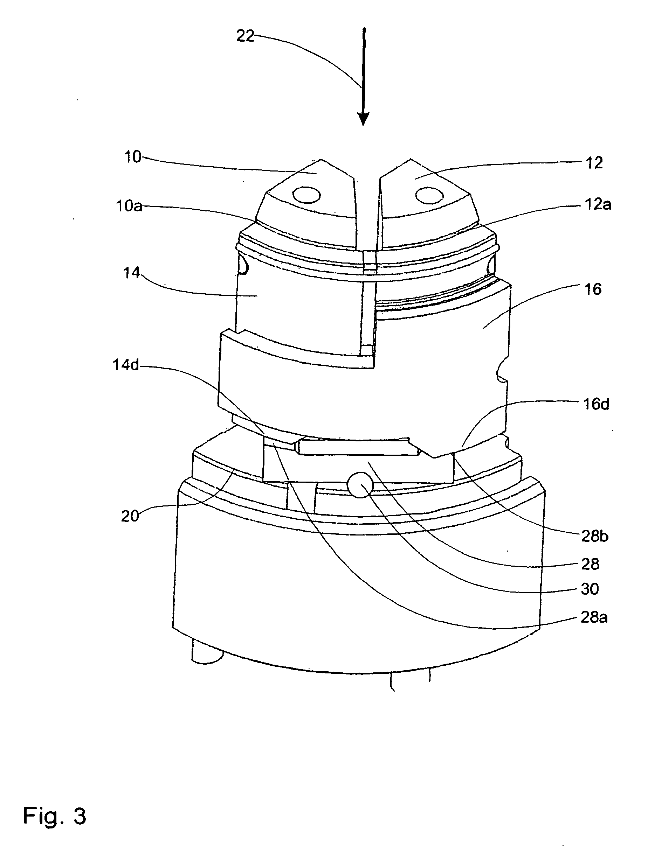

Fig. 3 zeigt aus einer entsprechenden Perspektive wie in Fig. 1 die zweite Ausführungsform der erfindungsgemäßen Spanneinrichtung. Diese unterscheidet sich von der in Fig. 1 und 2 dargestellten ersten Ausführungsform dadurch, dass statt der Nut 20a in der Führungsscheibe 20 und dem Keilelement 18 ein Lagerzapfen 30 sowie eine Waagebalken 28 vorgesehen sind. Der Lagerzapfen 30 ist in einer nicht dargestellten radialen Nut der Führungsscheibe 20 angeordnet. Auf dem Lagerzapfen 30 ist der Waagebalken 28 angeordnet. Dieser weist zwei Kontaktflächen 30a und 30b auf, die sich jeweils mit einem der in Spannrichtung 22 weisenden Enden 14d, 16d der beiden Aufnahmeteile 14,16 in Berührung befinden.

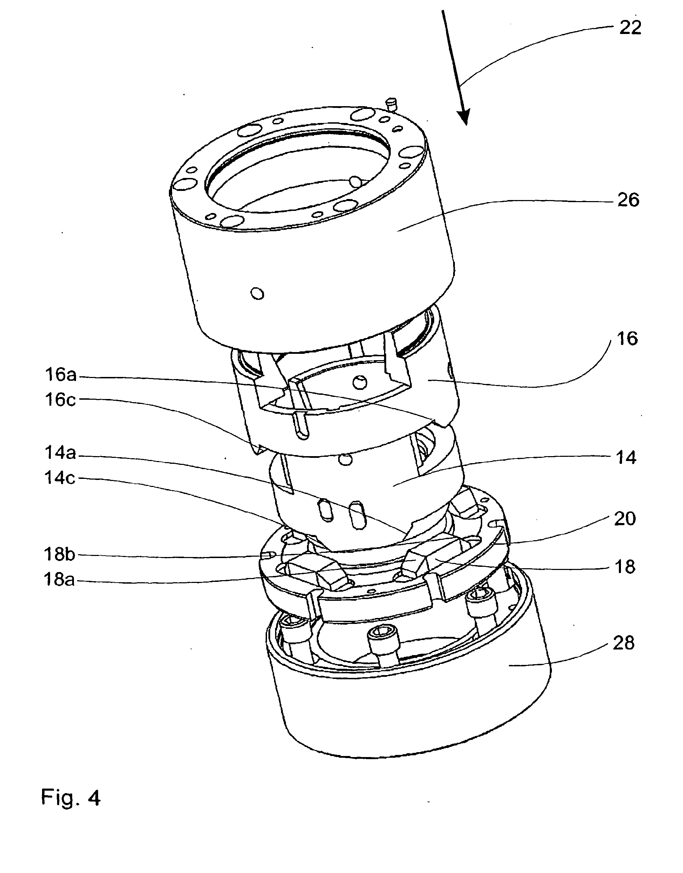

Fig. 4 zeigt eine Explosionsdarstellung der ersten Ausführungsform der Spannmittelaufnahme der Spanneinrichtung. Zu erkennen sind die beiden Aufnahmeteile 14, 16 sowie die Art und Weise in der das innere Aufnahmeteil 14 in das äußere Aufnahmeteil 16 geschoben ist. Beide Aufnahmeteile 14, 16 verfügen über jeweils vier Keilflächen, wobei beim inneren Aufnahmeteil 14 nur die beiden Keilflächen 14a, 14c zu erkennen sind. Beim äußeren Aufnahmeteil 16 sind die beiden Keilflächen 16a, 16c zu erkennen. Diese Keilflächen kommen beim Zusammenbau in Berührung mit entsprechenden Keilflächen 18a, 18b der Keilelemente 18. Von diesen Keilelementen 18 sind insgesamt vier Stück vorgesehen, welche in Nuten 20a der Führungsschreibe 20 geführt werden. Darüber hinaus ist ein Gehäuse 26 sowie ein Spindelflansch 28 zu sehen. Die Führungsscheibe 20 wird mit dem Spindelflansch 28 und dem Gehäuse 26 fest verbunden. Die beiden Aufnahmeteile 14, 16 haben in und entgegen der Spannrichtung 22 Spiel, wobei ihre Verschiebung über die Keilelemente 18 in einem festen Zusammenhang steht.

### Funktion

Das Einspannen eines Werkstücks läuft folgendermaßen ab. Die Kupplung 24 wird in Spannrichtung 22 gezogen. Dadurch kommt es ebenfalls zu einer Bewegung in gleicher Richtung durch die Spannkopfsegmente 10, 12. Da diese mit ihren Gleitflächen 10a, 12a mit den Gleitflächen 14b, 16b der Aufnahmeteile 14, 16 in Kontakt stehen, werden die Spannkopfsegmente 10, 12 sowie die anderen beiden nicht dargestellten Spannkopfsegmente gleichzeitig radial aufeinander zu bewegt. Wenn das erste der Spannkopfsegmente 10, 12 mit dem Werkstück in Berührung kommt, klemmt es dieses zusammen mit dem ihm gegenüber liegenden Spannkopfsegment ein. Für den beispielhaft angenommenen Fall, dass das Spannkopfsegment 10 sowie das ihm gegenüber liegenden Spannkopfsegment zuerst mit dem Werkstück in Berührung kommen, klemmen diese es fest. Infolgedessen ist eine weitere relative Bewegung zwischen dem Spannkopfsegment 10 und dem Aufnahmeteil 14 nicht mehr möglich. Deshalb wird durch einen weiteren Zug an der Kupplung 24 verursacht, dass das Spannkopfsegment 10 zusammen mit dem Aufnahmeteil 14 in Spannrichtung 22 gezogen wird.

Bei der in den Fig. 1, 2 und 4 dargestellten ersten Ausführungsform führt dies dazu, dass das Keilelement 18 bezüglich der Perspektive von Fig. 1 nach rechts verschoben wird und dabei das Aufnahmeteil 16 entgegen der Spannrichtung 22 verschiebt. Bei der in Fig. 3 dargestellten zweiten Ausführungsform wird der Waagebalken auf der linken Seite in die Spannrichtung 22 gedrückt, wodurch die rechte Seite eine Kraft entgegen der Spannrichtung 22 auf das Aufnahmeteil 16 ausübt und dieses dadurch verschiebt. Beide Ausführungsformen erzielen den Effekt, dass eine Verschiebung des einen Aufnahmeteils in Spannrichtung 22 eine gleichzeitige Verschiebung des anderen Aufnahmeteils entgegen der Spannrichtung verursacht. In der Konsequenz wird das Spannkopfsegment 12 durch weiteren Zug an der Kupplung 24 beschleunigt radial auf das Werkstück zu bewegt, denn während das Spannkopfsegment 12 mit der Gleitfläche 12a in Spannrichtung weitergezogen wird, wird das Aufnahmeteil 16 entgegen der Spannrichtung verschoben. Der Zug an der Kupplung 24 endet dann, wenn auch das Spannkopfsegment 12 sowie das nicht dargestellte ihm gegenüber liegende weitere Spannkopfsegment mit dem Werkstück in Berührung kommt. Das Werkstück ist dann von allen vier Seiten fest eingespannt und eine Bearbeitung ist in idealer Art und Weite möglich.

## Patentansprüche

1. Spanneinrichtung mit einer Spannmittelaufnahme und einem darin angeordneten Spannkopf, der mehrere Spannkopfsegmente (10, 12) aufweist und der in einer Spannrichtung (22) gegenüber der Spannmittelaufnahme verschiebbar ist, wobei die Spannmittelaufnahme eine schräge Innenfläche (14b, 16b) und die Spannkopfsegmente (10, 12) schräge Außenflächen (10a, 12a) aufweisen, so dass die Außenflächen (10a, 12a) der Spannkopfsegmente (10, 12) beim Verschieben des Spannkopfs in die Spannmittelaufnahme auf der Innenfläche (14b, 16b) der Spannmittelaufnahme in Spannrichtung (22) gleiten und die Spannkopfsegmente (10, 12) dadurch zusammengedrückt werden,
**dadurch gekennzeichnet, dass**
die Spannmittelaufnahme mehrere Aufnahmeteile (14, 16) aufweist, die in Spannrichtung (22) verschiebbar sind und so ausgebildet sind, dass jedes der Aufnahmeteile (14, 16) jeweils ein Segment oder zwei gegenüberliegende Segmente der schrägen Innenfläche (14b, 16b) aufweist, so dass jedes Aufnahmeteil jeweils die Gleitflächen (14b, 16b) für ein Spannkopfsegment (10, 12) beziehungsweise zwei sich gegenüberliegende Spannkopfsegmente (10, 12) aufweist, und dass Mittel (18) zur Kraftumlenkung vorgesehen sind, die in Reaktion auf eine Verschiebung eines Aufnahmeteils (14, 16) in oder entgegen der Spannrichtung (22) eine Verschiebung der anderen Aufnahmeteile (16, 14) in eine entgegengesetzte Richtung bewirken.

2. Spanneinrichtung gemäß Anspruch 1, **dadurch gekennzeichnet, dass** die Anzahl der Spannkopfsegmente (10, 12) gerade ist und für jeweils zwei gegenüberliegende Spannkopfsegmente (10, 12) ein Aufnahmeteil (14, 16) vorgesehen ist, welches je eine Gleitfläche (14b, 16b) für jeweils ein Spannkopfsegment (10, 12) aufweist.

3. Spanneinrichtung gemäß Anspruch 2, **dadurch gekennzeichnet, dass** sie zwei Aufnahmeteile (14, 16) und vier Spannkopfsegmente (10, 12) aufweist.

4. Spanneinrichtung gemäß einem der vorstehenden Ansprüche, **dadurch gekennzeichnet, dass** die Spannkopfsegmente (10, 12) regelmäßig auf einem Kreisbogen angeordnet sind.

5. Spanneinrichtung gemäß einem der vorstehenden Ansprüche, **dadurch gekennzeichnet, dass** die gesamte Innenfläche (14b, 16b) der Spannmittelaufnahme und die gesamte Außenfläche (10a, 12a) des Spannkopfs konisch ausgebildet sind.

6. Spanneinrichtung gemäß einem der vorstehenden Ansprüche, **dadurch gekennzeichnet, dass** die Mittel zur Kraftumlenkung ein Keilgetriebe aufweisen, welches auf einer zu der Spannrichtung (22) der Spanneinrichtung orthogonalen Ebene bewegliche Keilelemente (18) mit jeweils zwei Keilflächen (18a, 18b) aufweist, und dass die Aufnahmeteile (14, 16) jeweils Keilflächen (14a, 14c, 16a, 16c) aufweisen, die mit jeweils einer Keilfläche (18a, 18b) der Keilelemente (18) korrespondieren, wobei vorzugsweise die Anzahl der Keilelemente (18) gleich der Anzahl der Spannkopfsegmente (10, 12) ist.

7. Spanneinrichtung gemäß Anspruch 6, **dadurch gekennzeichnet, dass** die Keilelemente (18) symmetrisch ausgebildet sind, und vorzugsweise der Winkel der Keilflächen (18a, 18b) jeweils 45° beträgt.

8. Spanneinrichtung gemäß Anspruch 6, **dadurch gekennzeichnet, dass** die Keilelemente asymmetrisch ausgebildet sind und die beiden Keilflächen aller Keilelemente jeweils unterschiedliche Winkel aufweisen.

9. Spanneinrichtung gemäß einem der Ansprüche 6 bis 8, **dadurch gekennzeichnet, dass** eine Führung (20a) für die Keilelemente (18) vorgesehen ist, vorzugsweise in Form von nutenartigen Vertiefungen, insbesondere in einer Scheibe (20).

10. Spanneinrichtung gemäß Anspruch 9, **dadurch gekennzeichnet, dass** die Führung der Keilelemente so ausgebildet ist, dass die Keilelemente auf einer kreisbogenförmigen Bahn äquidistant zu einer Mittelachse der Spanneinrichtung geführt werden, insbesondere als kreisbogenartige Vertiefung.

11. Spanneinrichtung gemäß Anspruch 9, **dadurch gekennzeichnet, dass** die Führung (20a) der Keilelemente (18) gerade ausgebildet ist.

12. Spanneinrichtung gemäß einem der Ansprüche 1 bis 5, **gekennzeichnet durch** Kugeln als Mittel zur Kraftumlenkung, welche in einem oder mehreren, vorzugsweise U-förmigen, Kanälen angeordnet sind.

13. Spanneinrichtung gemäß einem der Ansprüche 1 bis 5, **dadurch gekennzeichnet, dass** die Mittel zur Kraftumlenkung einen Waagebalken (28) aufweisen, der um eine orthogonal zur Spannrichtung (22) ausgerichtete Achse kippbar oder drehbar angeordnet ist.

14. Spanneinrichtung gemäß einem der vorstehenden Ansprüche, **gekennzeichnet durch** elastische Verbindungselemente, mittels derer jedes Spannkopfsegment (10, 12) mit seinen beiden Nachbar-Spannkopfsegmenten verbunden ist.

15. Spanneinrichtung gemäß einem der vorstehenden Ansprüche, **dadurch gekennzeichnet, dass** in einem umlaufenden Spalt zwischen den in Spannrichtung (22) gegeneinander verschiebbaren Aufnahmeteilen (14, 16) der Spannmittelaufnahme Dichtmittel vorgesehen sind.

## Claims

1. Clamping mechanism with a clamping means receptacle and a clamping head arranged herein, which has several clamping head segments (10, 12) and which is displaceable in a clamping direction (22) with respect to the clamping means receptacle, the latter having a sloping inner surface (14b, 16b) and the clamping head segments (10, 12) have sloping outer surfaces (10a, 12a), so that the outer surfaces (10a, 12a) of the clamping head segments (10, 12) on displacing the clamping head into the clamping means receptacle slide in clamping direction (22) on the inner surface (14b, 16b) of said clamping means receptacle and as a result the clamping head segments (10, 12) are compressed, **characterized in that** the clamping means receptacle has several reception parts (14, 16) displaceable in the clamping direction (22) and constructed in such a way that each of the reception parts (14, 16) in each case has one segment or two facing segments of the sloping inner surface (14b, 16b), so that each reception part in each case has the sliding surfaces (14b, 16b) for a clamping head segment (10, 12) or two facing clamping head segments (10, 12), and that force reversal means(18) are provided, which in reaction to a displacement of a reception part (14, 16) in or counter to the clamping direction (22) bring about a displacement of the other reception parts (16, 14) in an opposing direction.

2. Clamping mechanism according to claim 1, **characterized in that** there is an even number of clamping head segments (10, 12) and a reception part (14, 16) is provided for in each case two facing clamping head segments (10, 12) and each has a sliding surface (14b, 16b) for in each case one clamping head segment (10, 12).

3. Clamping mechanism according to claim 2, **characterized in that** there are two reception parts (14, 16) and four clamping head segments (10, 12).

4. Clamping mechanism according to any of the preceding claims, **characterized in that** the clamping head segments (10, 12) are regularly positioned on a circular arc.

5. Clamping mechanism according to any of the preceding claims, **characterized in that** the complete inner surface (14b, 16b) of the clamping means receptacle and the complete outer surface (10a, 12a) of the clamping head have a conical construction.

6. Clamping mechanism according to any of the preceding claims, **characterized in that** the force reversal means are constituted by a key gear, which has key elements (18) movable on a plane orthogonal to the clamping direction (22) of the clamping mechanism and having in each case two key faces (18a, 18b), and **characterized in that** the reception means (14, 16) in each case have key faces (14a, 14c, 16a, 16c) corresponding with in each case one key face (18a, 18b) of the key elements (18) and preferably there are the same number of key elements (18) and clamping head segments (10, 12).

7. Clamping mechanism according to claim 6, **characterized in that** the key elements (18) are symmetrically constructed and preferably the angle of the key faces (18a, 18b) is 45°.

8. Clamping mechanism according to claim 6, **characterized in that** the key elements are asymmetrically constructed and the two key faces of all the key elements in each case have different angles.

9. Clamping mechanism according to claim 6 to 8, **characterized in that** a guide (20a), particularly in a disk (20), is provided for the key elements (18), preferably in the form of groove-like depressions.

10. Clamping mechanism according to claim 9, **characterized in that** the guide for the key elements is constructed in such a way that the key elements are guided on an arcuate path equidistantly with respect to a centre axis of the clamping mechanism, particularly in the form of an arcuate depression.

11. Clamping mechanism according to claim 9, **characterized in that** the guide (20a) of the key elements (18) is straight.

12. Clamping mechanism according to claim 1 to 5, **characterized in that** balls are provided as force reversal means and are located in one or more, preferably U-shaped channels.

13. Clamping mechanism according to claim 1 to 5, **characterized in that** the force reversal means have a balance beam (28) which is tiltable or rotatable about an axis oriented orthogonally to the clamping direction (22).

14. Clamping mechanism according to any of the preceding claims, **characterized in that** elastic connecting elements are provided and by means thereof each clamping head segment (10, 12) can be connected to its two neighbouring clamping head segments.

15. Clamping mechanism according to any of the preceding claims, **characterized in that** sealing means are provided in a circumferential gap between the reception parts (14, 16) of the clamping means receptacle displaceable against one another in the clamping direction (22).

## Revendications

1. Dispositif de serrage avec un logement du moyen de serrage et une tête de serrage y disposée, qui présente plusieurs segments (10, 12) de tête de serrage et qui est déplaçable dans une direction de serrage (22) par rapport au logement du moyen de serrage, sachant que le logement du moyen de serrage présente une surface intérieure (14b, 16b) oblique et les segments de tête de serrage (10, 12) des surfaces extérieures (10a, 12a) obliques, de sorte que les surfaces extérieures (10a, 12a) des segments de tête de serrage (10, 12) coulissent sur la surface intérieure (14b, 16b) du logement de moyen de serrage en direction de serrage (22) pendant le déplacement de la tête de serrage dans le logement du moyen de serrage et de sorte que les segments de tête de serrage (10, 12) soient ainsi serrés les uns contre les autres,
**caractérisé en ce que**
le logement du moyen de serrage présente plusieurs pièces de logement (14, 16), qui sont déplaçables en direction de serrage (22) et qui sont réalisés de telle manière que chacune des pièces de logement (14, 16) présente respectivement un segment ou deux segments opposés de la surface intérieure oblique (14b, 16b), de manière que chaque pièce de logement présente respectivement les surfaces de glissement (14b, 16b) pour un segment de tête de serrage (10, 12) ou encore pour deux segments de tête de serrage (10, 12) opposés l'un à l'autre, et qu'on prévoit des moyens de déviation de force (18), qui provoque, en tant que réaction à un déplacement d'une pièce de logement (14, 16) dans ou contre la direction de serrage (22), un déplacement des autres pièces de logement (16, 14) dans une direction opposée.

2. Dispositif de serrage d'après la revendication 1, **caractérisé en ce que** le nombre des segments de tête de serrage (10, 12) est pair et qu'on prévoit pour respectivement deux segments opposés de tête de serrage (10, 12) une pièce de logement (14, 16), qui présente respectivement une surface de glissement (14b, 16b) pour respectivement un segment de tête de serrage (10, 12).

3. Dispositif de serrage d'après la revendication 2, **caractérisé en ce qu'**il présente deux pièces de logement (14, 16) et quatre segments de tête de serrage (10, 12).

4. Dispositif de serrage d'après une des revendications précédentes, **caractérisé en ce que** les segments de tête de serrage (10, 12) sont distribués de manière uniforme sur un arc de cercle.

5. Dispositif de serrage d'après une des revendications précédentes, **caractérisé en ce que** toute la surface intérieure (14b, 16b) du logement de moyen de serrage et toute la surface extérieure (10a, 12a) de la tête de serrage sont réalisées de façon à présenter une forme conique.

6. Dispositif de serrage d'après une des revendications précédentes, **caractérisé en ce que** les moyens de déviation de force présentent un engrenage à profil trapézoïdal, qui présente des éléments cunéiformes (18) avec respectivement deux surfaces de clavette (18a, 18b) et mobiles sur un plan orthogonal par rapport à la direction de serrage (22) du dispositif de serrage, et **en ce que** les pièces de logement (14, 16) présentent respectivement des surfaces de clavette (14a, 14c, 16a, 16c) qui correspondent respectivement à une surface de clavette (18a, 18b) des éléments cunéiformes (18), sachant que de préférence le nombre des éléments cunéiformes (18) correspond au nombre des segments de tête de serrage (10, 12).

7. Dispositif de serrage d'après la revendication 6, **caractérisé en ce que** les éléments cunéiformes (18) sont réalisés de manière symétrique et que de préférence l'angle des surfaces de clavette (18a, 18b) comporte respectivement 45°.

8. Dispositif de serrage d'après la revendication 6, **caractérisé en ce que** les éléments cunéiformes sont réalisés de manière asymétrique et que les deux surfaces de clavette de tous les éléments cunéiformes présentent respectivement des angles différents.

9. Dispositif de serrage d'après une des revendications de 6 à 8, **caractérisé en ce qu'**on prévoit un guidage (20a) pour les éléments cunéiformes (18), de préférence sous forme de creux genre rainure, notamment dans un disque (20).

10. Dispositif de serrage d'après la revendication 9, **caractérisé en ce que** le guidage des éléments cunéiformes est réalisé de manière que les éléments cunéiformes soient guidés sur une trajectoire présentant la forme d'un arc de cercle et équidistante par rapport à un axe central du dispositif de serrage, notamment en tant que creux ressemblant à un arc de cercle.

11. Dispositif de serrage d'après la revendication 9, **caractérisé en ce que** le guidage (20a) des éléments cunéiformes (18) est réalisé de manière rectiligne.

12. Dispositif de serrage d'après une des revendications de 1 à 5, **caractérisé par** des billes en tant que moyen de déviation de force, lesquelles sont disposées dans un ou dans plusieurs conduits, qui présentent de préférence la forme d'un U.

13. Dispositif de serrage d'après une des revendications de 1 à 5, **caractérisé en ce que** les moyen de déviation de force présentent un traversin de balance (28) disposé de manière à être basculant ou rotatif autour d'un axe orienté en direction orthogonale par rapport à la direction de serrage (22).

14. Dispositif de serrage d'après une des revendications précédentes, **caractérisé par** des éléments de raccordement élastiques, par lesquels chaque segment de tête de serrage (10, 12) est joint à ses deux segments de tête de serrage limitrophes.

15. Dispositif de serrage d'après une des revendications précédentes, **caractérisé en ce qu'**on prévoit des moyens d'étanchéité dans une fente circulaire entre les pièces de logement (14, 16) déplaçables l'une par rapport à l'autre en direction de serrage (22).
